# EUROPEAN PATENT SPECIFICATION

(11) **EP 3 908 065 B1**
(45) Date of publication and mention of the grant of the patent: **21.10.2026**
(21) Application number: 19908446.8
(22) Date of filing: 10.01.2019
(51) Int. Cl.: H04W 72/20, H04W 76/14, H04W 72/543

(54) **METHOD AND APPARATUS FOR DETERMINING SIDELINK RESOURCE, USER EQUIPMENT AND BASE STATION**
VERFAHREN UND VORRICHTUNG ZUR BESTIMMUNG EINER SIDELINK-RESSOURCE, BENUTZERGERÄT UND BASISSTATION
PROCÉDÉ ET APPAREIL PERMETTANT DE DÉTERMINER UNE RESSOURCE DE LIAISON LATÉRALE, ÉQUIPEMENT UTILISATEUR ET STATION DE BASE

(43) Date of publication of application: 10.11.2021
(73) Proprietor: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2019/071213
(87) International publication number: WO 2020/142995

(56) References cited:
- EP-A1- 3 273 634
- WO-A1-2018/022225
- WO-A2-2010/100657
- CN-A- 104 936 292
- CN-A- 107 580 340
- CN-A- 108 696 935
- US-A1- 2017 006 653
- US-A1- 2017 257 876

## Description

### TECHNICAL FIELD

The present disclosure relates to the field of communication technology, and in particular to methods, a user equipment and a base station for determining sidelink resource.

### BACKGROUND

With development of wireless communication technology, mobile communication networks have gradually evolved to 5G (fifth generation mobile communication technology) New Radio (5G NR for short) systems. In the 5G NR systems, sidelink technology has also been introduced, that is, direct communication between user equipment (UE for short) is performed by using radio resources. Similar to the sidelink technology in 4G Long Term Evolution (4G LTE for short) systems, the sidelink technology in the 5G NR systems can be applied to application scenarios such as Vehicle-to-Everything (V2X for short).

In LTE systems, when one UE communicates with another UE by using the sidelink technology, it may determine radio transmission resources in a network dynamic scheduling mode, or by autonomous selection from a resource pool broadcast by a network (also named as network broadcast mode). In the LTE systems, the UE can select only one of resource configuration modes to determine sidelink transmission resources. With the network broadcast mode, if UE is in an idle state, it is not required to enter a connected state, which can save signaling overhead of the NR; but the network needs to reserve resources for a sidelink resource pool in the broadcast, and resource utilization rate is low. With the network dynamic scheduling mode, resources can be configured according to actual sidelink service requirements, and the resource utilization rate is relatively high; but the UE in the idle state is required to enter the connected state, which increases the signaling overhead.

The 5G NR systems place higher demands on flexible resource configuration and efficient resource utilization. Therefore, how to determine NR sidelink resources is to be studied.

US2017/006653 A1 discloses a resource allocation method and a resource allocation equipment for D2D signal transmission. EP 3273634 A1 discloses systems and methods of providing a V2X communications. WO 2018/022225 A1 discloses transmitting device for transmitting vehicular data via a sidelink interface to one or more receiving devices. US2017257876A1 discloses logical channel prioritization procedure for sidelink logical channels.

### SUMMARY

The invention is defined in the independent claims. Particular embodiments are set out in the dependent claims.

### BRIEF DESCRIPTION OF THE DRAWINGS

The accompanying drawings, which are incorporated in and constitute a part of the present description, illustrate examples consistent with the present disclosure and serve to explain the principles of the present disclosure together with the description.
FIG. 1 illustrates application scenarios for determining sidelink resource according to an example of the present disclosure.
FIG. 2 is a flowchart illustrating a method of determining sidelink resource according to an example of the present disclosure.
FIG. 3 is a flowchart illustrating another method of determining sidelink resource according to an example of the present disclosure.
FIG. 4 is a flowchart illustrating another method of determining sidelink resource according to an example of the present disclosure.
FIG. 5 is a flowchart illustrating another method of determining sidelink resource according to an example of the present disclosure.
FIG. 6 is a flowchart illustrating another method of determining sidelink resource according to an example of the present disclosure.
FIG. 7 is a flowchart illustrating another method of determining sidelink resource according to an example of the present disclosure.
FIG. 8 is a flowchart illustrating another method of determining sidelink resource according to an example of the present disclosure.
FIG. 9 is a flowchart illustrating a method of determining sidelink resource according to an example of the present disclosure.
FIG. 10 is a flowchart illustrating another method of determining sidelink resource according to an example of the present disclosure.
FIG. 11, not being part of the invention, is a block diagram illustrating an apparatus for determining sidelink resource according to an example of the present disclosure.
FIG. 12, not being part of the invention, is a block diagram illustrating another apparatus for determining sidelink resource according to an example of the present disclosure.
FIG. 13, not being part of the invention, is a block diagram illustrating another apparatus for determining sidelink resource according to an example of the present disclosure.
FIG. 14, not being part of the invention, is a block diagram illustrating another apparatus for determining sidelink resource according to an example of the present disclosure.
FIG. 15, not being part of the invention, is a block diagram illustrating another apparatus for determining sidelink resource according to an example of the present disclosure.
FIG. 16, not being part of the invention, is a block diagram illustrating another apparatus for determining sidelink resource according to an example of the present disclosure.
FIG. 17, not being part of the invention, is a block diagram illustrating another apparatus for determining sidelink resource according to an example of the present disclosure.
FIG. 18, not being part of the invention, is a block diagram illustrating an apparatus for determining sidelink resource according to an example of the present disclosure.
FIG. 19, not being part of the invention, is a block diagram illustrating another apparatus for determining sidelink resource according to an example of the present disclosure.
FIG. 20 is a schematic structural diagram illustrating user equipment according to an example of the present disclosure.
FIG. 21 is a schematic structural diagram illustrating a base station according to an example of the present disclosure.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are only for the purpose of describing specific examples and are not intended to limit the present disclosure. The singular forms "a", "said" and "the" used in the present disclosure and the appended claims are also intended to include plural forms, unless the context clearly indicates other meanings. It should also be understood that the term "and/or" as used herein refers to and includes any or all possible combinations of one or more associated listed items.

It should be understood that although the terms "first", "second", "third", etc. may be used in the present disclosure to describe various information, the information should not be limited to these terms. These terms are only used to distinguish information of the same type from each other. For example, without departing from the scope of the present disclosure, the first information may also be referred to as second information, and similarly, the second information may also be referred to as first information. Depending on the context, the word "if" as used herein may be interpreted as "on the condition that" or "when" or "in response to determining".

The subjects for performing each process or step involved in the present disclosure include: user equipment (UE for short) and base stations that support sidelink technology in 5G NR systems. The UE can be a user terminal, a user node, a mobile terminal, a tablet computer, or on-board equipment, etc. The base stations may include a base station, a sub-base station, etc., provided with a large-scale antenna array. In a specific implementation, the base station and the UE are independent of each other, and meanwhile connected to each other to jointly implement technical solutions provided by the present disclosure.

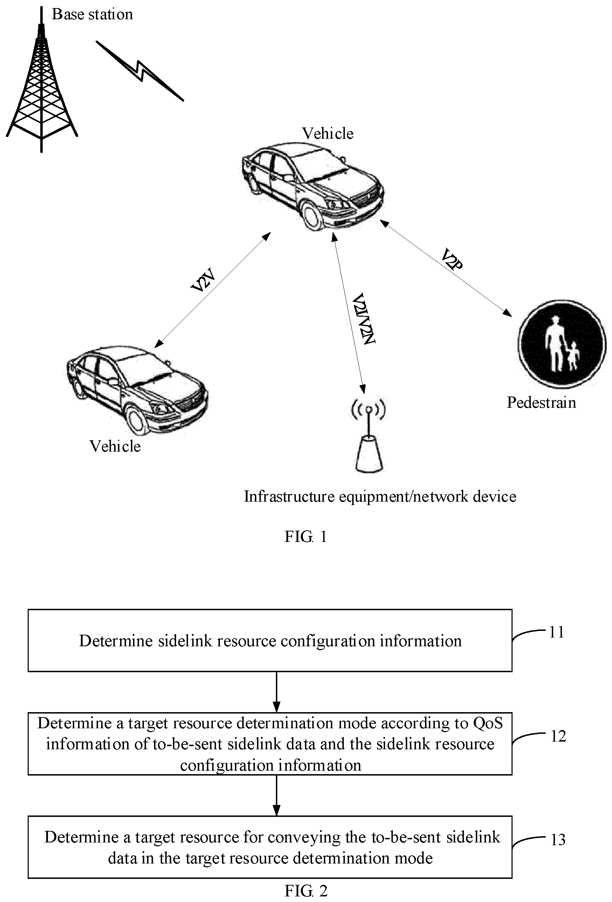

The present disclosure may be applied to an application scenario of Vehicle to Everything (V2X for short). Refer to FIG. 1 showing the scenario application according to an example of the present disclosure. Specifically, V2X may include: vehicle to vehicle communication (V2V for short), Vehicle to Infrastructure communication (V2I for short), Vehicle to Nomadic Device communication (V2N for short) representing communication between a vehicle and a Nomadic Device of a driver, Vehicle to Pedestrain (V2P for short) communication representing communication between a vehicle and a Nomadic Device of a pedestrain, and so on. In the application scenario, UE supporting sidelink technology may be equipment such as on-board equipment, infrastructure equipment, and a mobile terminal of a pedestrian. In the sidelink technology, the UE can transmit information to other UE by using the sidelink transmission resources configured by a system.

Before preparing to send information to surrounding UE by using the sidelink technology, the UE is to determine sidelink resources first.

Thus, the present disclosure provides a method for determining sidelink resources applied to the UE.

Referring to FIG. 2 showing a flowchart of a method for determining sidelink resources according to an example, the method may include the following steps.

At step 11, sidelink resource configuration information is determined, where the sidelink resource configuration information is used to instruct the UE to determine a target sidelink resource according to quality of service (QoS for short) information of to-be-transmitted sidelink data.

The sidelink resource configuration information in the present disclosure is mainly used to instruct the UE to use which mode to determine the target sidelink resource according to the QoS information of the to-be-transmitted sidelink data.

The to-be-transmitted sidelink data includes: to-be-sent sidelink data or to-be-received sidelink data. The QoS information of the to-be-transmitted sidelink data indicates requirements for transmission reliability, transmission delay, transmission rate, transmission distance and other transmission performance parameters of the to-be-transmitted sidelink data.

The target sidelink resource refers to a radio resource for conveying the to-be-transmitted sidelink data.

Taking the UE being UE1 as an example, in the present disclosure, UE1 can determine the sidelink resource configuration information in at least two modes as follows.

in mode 1, if sidelink resource configuration information broadcast by a current cell has been stored by UE1, UE1 directly determines the sidelink resource configuration information according to the stored information.

in mode 2, if the sidelink resource configuration information of the current cell is not pre-stored in UE1, UE1 can receive the sidelink resource configuration information broadcast by the cell.

Similar to LTE sidelink technology, in 5G NR technology, a base station supporting the sidelink technology can specify periodically broadcasting sidelink resource configuration information to UE in a serving cell according to a protocol.

The sidelink resource configuration information may be carried in preset system information. For example, if LTE sidelink protocol is still used in 5G NR sidelink technology, the sidelink resource configuration information may be carried in system information SIB18, 19, 21, and 26 and broadcast to the UE in the cell. In response to receiving the system information, UE in an idle state (IDLE) in a current cell can parse the sidelink resource configuration information from the system information.

At step 12, a target resource determination mode is determined according to QoS information of to-be-sent sidelink data and the sidelink resource configuration information.

In the present disclosure, in response to determining the to-be-sent sidelink data, the UE can learn QoS information of the to-be-sent sidelink data according to related art; then the target resource determination mode is determined according to the QoS information of the to-be-sent sidelink data and the sidelink resource configuration information.

The QoS information may include: service data priority indication information, or channel quality indication information.

In an embodiment, the service data priority indication information may be Prose Per Packet Priority (PPPP for short). The channel quality indication information may be 5QI information that quantifies channel quality according to a preset rule. For example, the 5QI information is similar to CQI in LTE system, and can be quantified as a preset number of 5QI levels according to system specifications.

The target resource determination mode is used to instruct the UE to use which mode to determine the target sidelink resource.

In the present disclosure, a system can specify that in NR sidelink technology, UE can further determine the target sidelink resource in following two sidelink resource determination modes:
in a first resource determination mode, UE selects a target sidelink resource from a resource pool pre-configured by the system; and
in a second resource determination mode, UE in a connected state requests a base station to dynamically configure a target sidelink resource for it.

In the present disclosure, UE may determine a mode from the resource determination modes according to a preset strategy as the target resource determination mode.

According to different sidelink resource configuration information, UE can implement the step 12 by using at least one of the following methods.

In a first method, the sidelink resource configuration information includes: a correspondence between a preset resource pool and first preset QoS information.

Similar to the LTE sidelink technology, in the NR sidelink technology, a system can further manage time-frequency resources used in sidelink communication by using a resource pool. A resource pool is a collection of periodic time-frequency resources on a given system bandwidth.

In the present disclosure, the system can only specify that when QoS information of to-be-sent sidelink data of UE satisfies preset QoS information, UE in an idle state is allowed to select a target sidelink resource from a preset resource pool, thereby avoiding that the system occupies too many resources to incur a low resource utilization due to configuring too many resource pools.

For example, the system may specify that when a service priority of to-be-sent sidelink data is higher, UE in an idle state may select a target sidelink resource from a preset resource pool to transmit the to-be-sent sidelink data.

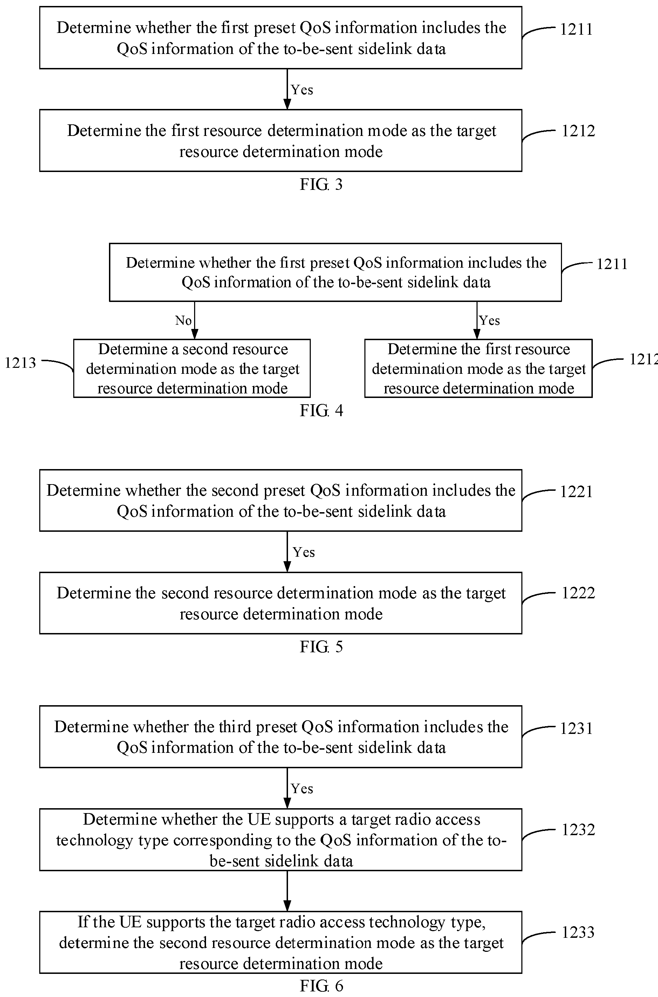

Referring to FIG. 3 showing a flowchart of another method for determining sidelink resources according to an example, the step 12 may include following steps.

At step 1211, it is determined whether the first preset QoS information includes the QoS information of the to-be-sent sidelink data.

In the present disclosure, in response to determining the QoS information of the to-be-sent sidelink data, UE1 can determine whether the first preset QoS information includes the QoS information of the to-be-sent sidelink data; if the first preset QoS information includes the QoS information of the to-be-sent sidelink data, following step 1212 is performed.

If the first preset QoS information does not include the QoS information of the to-be-sent sidelink data, in one case, it means that UE1 cannot determine a sidelink resource according to resource configuration information of a current base station. UE1 can abandon sidelink transmission or switch to another cell to determine the target sidelink resource; in another case, UE1 can enter a connected state, and request a base station to dynamically schedule a sidelink resource for it according to system specification information, which will be described in detail later in conjunction with detailed description.

At step 1212, if the first preset QoS information includes QoS information of the to-be-sent sidelink data, the first resource determination mode is determined as the target resource determination mode, and the first resource determination mode involves determining the target resource from the preset resource pool.

In the embodiments of the present disclosure, the system may specify that a base station can configure different preset resource pools for different application scenarios, for example, the base station can configure different preset resource pools for V2V, V2I, V2N, and V2P.

For a single application scenario, a base station can configure a correspondence between a preset resource pool and preset QOS information, the correspondence including one-to-one correspondence, one-to-many correspondence, many-to-one correspondence, many-to-many correspondence, and so on.

Taking the one-to-one approach as an example, assuming that for a V2N application scenario, the system specifies that there are two preset resource pools A and B, respectively corresponding to first preset QoS information QoS a and QoS b; the sidelink resource configuration information can be shown in Table 1:

**Table 1**

| **Resource pool identifier** | **First preset QoS information** |
|---|---|
| Resource pool A | QoS a |
| Resource pool B | QoS b |

Assuming that UE1 in an idle state determines that QoS information of current to-be-sent sidelink data is QoS a, UE1 can determine to select a target sidelink resource from a target preset resource pool, namely the preset resource pool A; that is, UE1 determines the first resource determination mode as the target resource determination mode.

Referring to FIG. 4 showing a flowchart of another method for determining sidelink resources according to an example, on the basis of the embodiment shown in FIG. 3, the step 12 may further include:

at step 1213, if the first preset QoS information does not include the QoS information of the to-be-sent sidelink data, a second resource determination mode is determined as the target resource determination mode. The second resource determination mode involves requesting a network to dynamically schedule sidelink resources.

In an embodiment of the present disclosure, if the UE determines that the first preset QoS information does not include the QoS information of the to-be-sent sidelink data, in one case, the UE can acquire the target sidelink resource in requesting for network dynamic scheduling mode, i.e. the second resource determination mode, according to the system specification information.

In another embodiment of the present disclosure, sidelink resource configuration information broadcast by a base station includes: the correspondence between the preset resource pool and the first preset QoS information, and may further include: first preset indication information for informing UE that when the first preset QoS information does not include the QoS information of the to-be-sent sidelink data, the second resource determination mode is used to request the base station to dynamically schedule sidelink resources for the UE.

The first preset indication information can be represented by a preset bit value in preset system information. For example, when the system specifies that the sidelink resource configuration information is carried in SIB 18, the system may further specify that the first preset indication information is carried by a bit with serial number N in SIB18. When the bit with sequence number N is set to 1, it means that the first preset indication information is carried, which indicates that the base station supports following capabilities: when the first preset QoS information does not include the QoS information of the to-be-sent sidelink data, the UE may request the base station to dynamically schedule sidelink resources for it in the second resource determination mode.

In contrast, when the bit with sequence number N is set to 0, it means that the sidelink resource configuration information broadcast by the base station does not include the first preset indication information, which indicates that the base station does not support the above capabilities. In this case, the UE can acquire the target sidelink resource by using other methods such as switching to a cell served by another base station.

The step 1213 includes: if the first preset QoS information does not include the QoS information of the to-be-sent sidelink data, the second resource determination mode is determined as the target resource determination mode according to the first preset indication information.

In a second method, the sidelink resource configuration information includes: a correspondence between second preset QoS information and a second resource determination mode, and the second resource determination mode involves requesting a network to dynamically schedule sidelink resources.

Referring to FIG. 5 showing a flowchart of another method for determining sidelink resources according to an example, the step 12 may include following steps.

At step 1221, it is determined whether the second preset QoS information includes the QoS information of the to-be-sent sidelink data.

In the embodiments of the present disclosure, the sidelink resource configuration information broadcast by the base station may include: a correspondence between second preset QoS information and a second resource determination mode.

In an embodiment of the present disclosure, the sidelink resource configuration information may be expressed as a preset sidelink QoS list.

Still as the above example, after UE1 determines the QoS information of the to-be-sent sidelink data, or in response to UE1 determining that the first preset QoS information does not include the QoS information of the to-be-sent sidelink data, the preset sidelink QoS list can be traversed to determine whether the second preset QoS information includes the QoS information of the to-be-sent sidelink data; if the second preset QoS information includes the QoS information of the to-be-sent sidelink data, following step 1222 is performed; if the second preset QoS information does not include the QoS information of the to-be-sent sidelink data, the target sidelink resource can be determined in other modes or sidelink transmission in a current cell can be abandoned according to a relevant specification.

At step 1222, if the second preset QoS information includes the QoS information of the to-be-sent sidelink data, the second resource determination mode is determined as the target resource determination mode.

For example, it is assumed that content indicated by the sidelink resource configuration information may be as shown in Table 2:

**Table 2**

| **Second preset QoS information** | **Sidelink resource determination mode** |
|---|---|
| QoS c | Request a network to dynamically schedule |
| QoS d | |

Assuming that QoS information of to-be-sent sidelink data of UE1 is QoS c; it can be known from the Table 2 that UE1 can determine the second resource determination mode, namely, the requesting a network to dynamically schedule mode, as the target resource determination mode.

In the embodiments of the present disclosure, a base station can notify that UE in a cell meets conditions of a network to dynamically scheduling resource through the sidelink resource configuration information, so that the UE enters the connected state when the preset conditions are met according to the QoS information of the to-be-sent sidelink data. In response to a communication connection with the base station being established, the UE requests the base station to dynamically configurate sidelink resources for it.

In a third method, the sidelink resource configuration information includes: a correspondence between third preset QoS information, and a second resource determination mode and a preset radio access type; as described above, the second resource determination mode involves requesting a network to dynamically schedule sidelink resources.

The third preset QoS information may be the same as or different from the second preset QoS information.

Referring to FIG. 6 showing a flowchart of another method for determining sidelink resources according to an example, the step 12 may include following steps.

At step 1231, it is determined whether the third preset QoS information includes the QoS information of the to-be-sent sidelink data;

Similar to the step 1221, after UE1 determines the QoS information of the to-be-sent sidelink data, or in response to UE1 determining that the first preset QoS information does not include the QoS information of the to-be-sent sidelink data, UE1 determines whether the third preset QoS information includes the QoS information of the to-be-sent sidelink data;

If the third preset QoS information includes the QoS information of the to-be-sent sidelink data, following step 1232 is performed; if the third preset QoS information does not include the QoS information of the to-be-sent sidelink data, the target sidelink resource can be determined in other modes or sidelink transmission in a current cell is abandoned according to a relevant specification.

At step 1232, if the third preset QoS information includes the QoS information of the to-be-sent sidelink data, it is determined whether the UE supports a target radio access technology type corresponding to the QoS information of the to-be-sent sidelink data.

The target radio access technology type may include: NR sidelink access technology, and/or LTE sidelink access technology.

Still taking UE1 as an example, if UE1 determines that the third preset QoS information includes the QoS information of the to-be-sent sidelink data, it is to further determine whether the sidelink radio access technology type it supports matches a radio access technology type required by the system. If the sidelink radio access technology type it supports matches the radio access technology type required by the system, following step 1233 is performed; otherwise, the target sidelink resource can be determined in other modes or sidelink transmission in a current cell is abandoned according to a relevant specification.

At step 1233, if the UE supports the target radio access technology type, the second resource determination mode is determined as the target resource determination mode.

In the embodiments of the present disclosure, for UE1, when the determined QoS information of the to-be-sent sidelink data and the supported sidelink radio access technology type both satisfy requirements of the sidelink resource configuration information, the second resource determination mode may be determined as the target resource determination mode.

For example, it is assumed that content indicated by the sidelink resource configuration information may be as shown in Table 3:

**Table 3**

| **Third preset QoS information** | **Sidelink resource determination mode** | **Radio access technology type** |
|---|---|---|
| QoS e | Request a network to dynamically schedule | NR sidelink access technology |
| QoS f | | LTE sidelink access technology |

Assuming that the QoS information of the to-be-sent sidelink data of UE1 is QoS e; according to the Table 3, UE1 is to further determine whether the sidelink radio access technology required by the to-be-sent sidelink data is the target radio access technology type corresponding to QoS e, namely NR Sidelink access technology; if the sidelink radio access technology required by the to-be-sent sidelink data is the target radio access technology type corresponding to QoS e, the second resource determination mode can be determined as the target resource determination mode.

In an embodiment of the present disclosure, an APP layer of UE may, when generating a data packet of the to-be-sent sidelink data, specify a sidelink radio access technology type required for the to-be-sent sidelink data.

In the embodiments of the present disclosure, the sidelink radio access technology type may be LTE sidelink access technology, or NR sidelink access technology, or both are applicable.

That is, the data packet of the to-be-sent sidelink data obtained by a physical layer of UE1 carries sidelink radio access technology indication information. Based on the sidelink radio access technology indication information, UE1 can determine which sidelink radio access technology is to be used for the to-be-sent sidelink data.

In the embodiments of the present disclosure, a base station not only specifies QoS information of sidelink data for which a second resource determination mode can be used, but also further specifies a sidelink radio access technology type, so that when determining that QoS information of to-be-sent sidelink data belongs to the third preset QoS information and the supported sidelink radio access technology type also satisfy system requirements, UE determines the second resource determination mode as the target resource determination mode.

At step 13, a target resource for conveying the to-be-sent sidelink data is determined in the target resource determination mode.

Corresponding to different target resource determination modes, the step 13 may also include two cases.

In case 1, the target resource determination mode determined by the UE is the first resource determination mode.

Correspondingly, the step 13 may include: determining the target resource from a target preset resource pool corresponding to the QoS information of the to-be-sent sidelink data.

As shown in the Table 1, when QoS information of to-be-sent sidelink data of UE1 is QoS a, UE1 may select a target resource from resources configured by a target preset resource pool A according to related art.

In case 2, the target resource determination mode determined by the UE is the second resource determination mode.

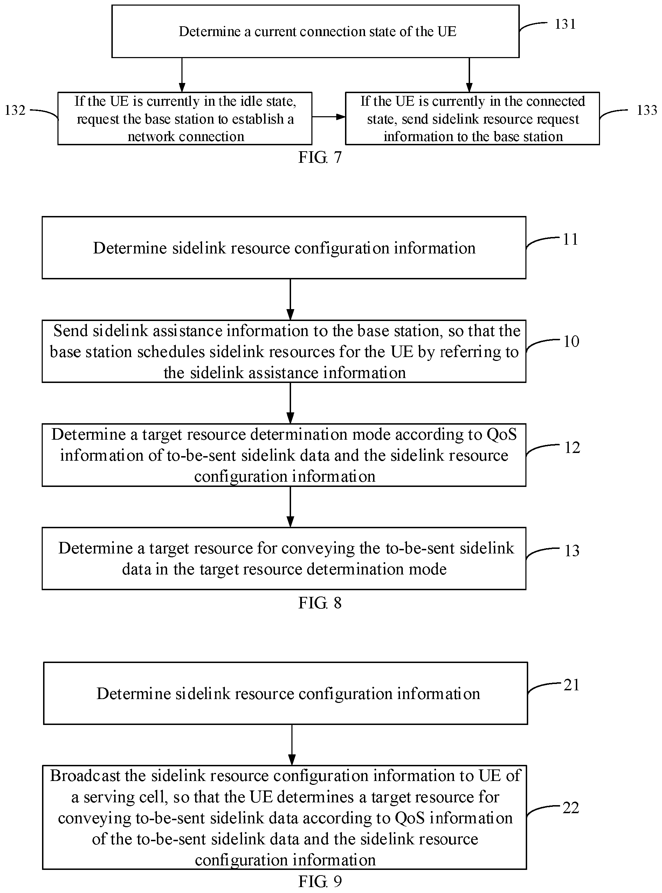

Referring to FIG. 7 showing a flowchart of another method for determining sidelink resources according to an example, the step 13 may include following steps.

At step 131, a current connection state of the UE is determined.

A network connection state of UE in a cell may at least include: an idle state (IDLE) and a connected state (CONNECTED); only in the connected state, the UE can send data to a base station through a physical channel.

At step 132, if the UE is currently in the idle state, the UE requests the base station to establish a network connection.

At step 133, if the UE is currently in the connected state, sidelink resource request information is sent to the base station.

The sidelink resource request information is used to request the base station to dynamically schedule sidelink resources for the UE.

As in the above example, if UE1 is currently in an idle state, it is first to request the base station to establish a network connection, such as sending a random access request to the base station. In response to the base station responding to the random access request and allowing access to a cell network, that is, UE1 enters the connected state, UE1 sends the sidelink resource request information to the base station, requesting the base station to schedule sidelink resources for it.

The embodiments of the present disclosure provide a method for determining sidelink resources. UE can perform a match for sidelink resource configuration information of the system according to quality of service information (QoS information) of to-be-sent sidelink data. The sidelink resource configuration information indicates a correspondence between QoS information of sidelink data and a preset resource determination mode; UE can determine a target resource determination mode suitable for current to-be-sent sidelink data, thereby determining a target resource for conveying to-be-sent sidelink data in the target resource determination mode. The target resource can be acquired in an appropriate resource determination mode determined in the sidelink resource determination mode according to a system planning, so that the system can reasonably balance a relationship between resource utilization and signaling overhead, improve effective utilization of system resources and reduce system signaling overhead.

Referring to FIG. 8 showing a flowchart of another method for determining sidelink resources according to an example, following the step 11, the method may further include:

at step 10, sidelink assistance information is sent to the base station, so that the base station schedules sidelink resources for the UE by referring to the sidelink assistance information.

In an embodiment of the present disclosure, in response to receiving sidelink resource configuration information broadcast by a base station, UE1 can further send its own sidelink assistance information to the base station; the sidelink assistance information of UE1 is used to inform the base station of information of UE1 using sidelink technology, such as destination ID, whether to perform sidelink transmission currently, etc.

In an embodiment of the present disclosure, UE1 may send the sidelink assistance information to the base station through a sidelink UE Information message.

Correspondingly, in response to acquiring the sidelink assistance information of UE1, the base station can determine whether it is possible to schedule sidelink resources for UE1, and in response to it being possible to schedule sidelink resources for UE1, the base station can determine whether to configure sidelink resources and other information for UE1 currently to improve accuracy of dynamic scheduling of sidelink resources of the base station for the UE, thereby improving effective utilization of system resources.

Correspondingly, the present disclosure further provides a method for determining sidelink resources applied to a base station.

Referring to FIG. 9 showing a flowchart of a method for determining sidelink resources according to an example, the method includes following steps.

At step 21, sidelink resource configuration information is determined, where the sidelink resource configuration information is used to instruct UE to determine a target sidelink resource according to quality of service (QoS) information of the to-be-transmitted sidelink data.

As described above, in the present disclosure, the base station can determine different sidelink resource configuration information for different application scenarios. For a single application scenario such as a V2V scenario, the base station can configure a correspondence between a preset resource pool and preset QoS information, and/or a correspondence between preset QoS information and the second resource determination mode; and generate the sidelink resource configuration information according to the correspondence between the preset QoS information and the preset resource determination mode.

At step 22, the sidelink resource configuration information is broadcast to UE of a serving cell, so that the UE determines a target resource for conveying to-be-sent sidelink data according to QoS information of the to-be-sent sidelink data and the sidelink resource configuration information.

In the present disclosure, the sidelink resource configuration information includes at least one of the following:
a correspondence between a preset resource pool and first preset QoS information;
a correspondence between second preset QoS information and a second resource determination mode, where the second resource determination mode involves requesting a network to dynamically schedule sidelink resources; and
a correspondence between a third preset QoS information, and the second resource determination mode and a preset radio access type.

Correspondingly, in response to receiving the sidelink resource configuration information, UE determines a target resource for conveying the to-be-sent sidelink data according to at least one of the embodiments shown in FIG. 3 to FIG.7.

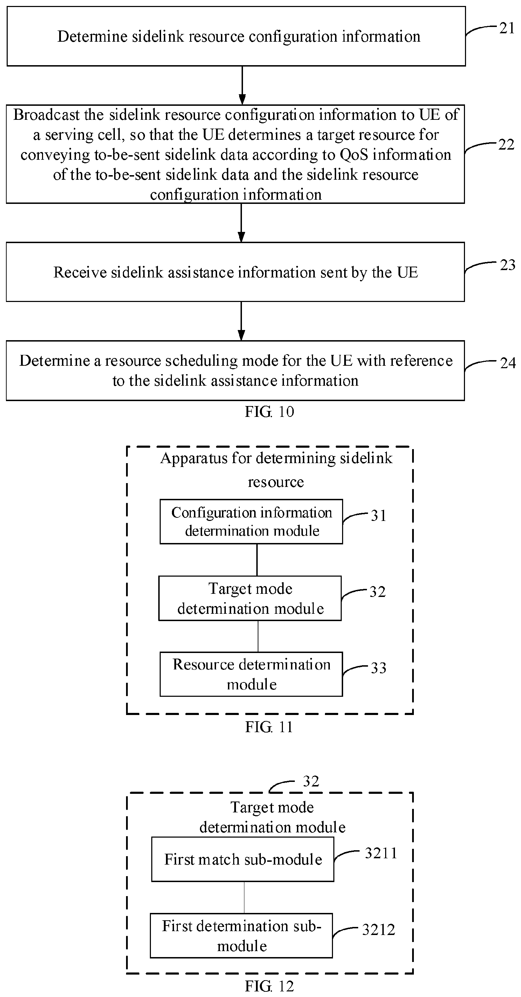

Referring to FIG. 10 showing a flowchart of another method for determining sidelink resources according to an example, the method may further include following steps.

At step 23, sidelink assistance information sent by the UE is received.

Corresponding to the step 10, still taking UE1 as an example, the base station can receive sidelink assistance information sent by UE1. The sidelink assistance information of UE1 is used to inform the base station of information of UE1 using sidelink technology, such as destination ID, whether to perform sidelink transmission currently, etc

At step 24, a resource scheduling mode for the UE is determined with reference to the sidelink assistance information.

In response to acquiring the sidelink assistance information of UE1, the base station can determine whether it is possible to schedule sidelink resources for UE1, and in response to it being possible to schedule sidelink resources for UE1, the base station can determine whether to configure sidelink resources and other information for UE1 currently.

For example, when a current base station determines that it is not possible to dynamically schedule sidelink resources for UE1 according to the sidelink assistance information of UE1, it can perform mobility management on UE1 and instruct UE1 to switch to a serving cell of another target base station that can dynamically schedule sidelink resources for UE1.

Alternatively, if the base station determines, according to the sidelink assistance information of UE1, that UE1 is not to perform sidelink transmission at present, the base station can perform resource scheduling in consideration of UE1 being a general UE, and temporarily does not configure sidelink resources for UE1. When UE1 requests the base station to schedule sidelink resources for UE1, the base station then configures sidelink resources for UE1. Such way can avoid that the base station informs sidelink resource configuration information by using signaling even when UE1 is not to perform sidelink transmission, thereby reducing system signaling overhead.

The above-mentioned method embodiments are presented as a series of actions for simplicity of description, but those skilled in the art should know that the present disclosure is not limited by the sequence of actions described, because some steps may be performed in other sequences or simultaneously according to the present disclosure.

Secondly, those skilled in the art should also know that the embodiments described in the specification are optional embodiments, and involved actions and modules are not necessarily required by the present disclosure.

Corresponding to the above-mentioned method embodiments, the present disclosure also provides apparatus embodiments and corresponding terminal embodiments.

Correspondingly, the present disclosure provides an apparatus for determining sidelink resource, which may be provided in UE.

Referring to FIG. 11 showing a block diagram illustrating an apparatus for determining sidelink resource according to an example of the present disclosure, not being part of the invention, the apparatus may include:
a configuration information determination module 31, configured to determine sidelink resource configuration information, where the sidelink resource configuration information is used to instruct the user equipment to determine a target sidelink resource according to quality of service (QoS) information of to-be-transmitted sidelink data;
in an apparatus embodiment of the present disclosure, the QoS information may include: sidelink data package priority indication information, or channel quality indication information.
a target mode determination module 32, configured to determine a target resource determination mode according to the QoS information of the to-be-transmitted sidelink data and the sidelink resource configuration information; and
a resource determination module 33, configured to determine the target sidelink resource for conveying the to-be-transmitted sidelink data in the target resource determination mode.

In another apparatus embodiment of the present disclosure, not being part of the invention, the configuration information determination module 31 may be configured to acquire sidelink resource configuration information broadcast by a base station.

In an apparatus embodiment of the present disclosure, not being part of the invention, the sidelink resource configuration information determined by the configuration information determination module 31 may include: a correspondence between a preset resource pool and first preset QoS information.

Correspondingly, referring to FIG. 12 showing a block diagram illustrating another apparatus for determining sidelink resource according to an example of the present disclosure, not being part of the invention, on the basis of the apparatus embodiment shown in FIG. 11, the target mode determination module 32 may include:
a first match sub-module 3211, configured to determine whether the first preset QoS information includes the QoS information of the to-be-transmitted sidelink data; and
a first determination sub-module 3212, configured to, in response to the first preset QoS information including the QoS information of the to-be-transmitted sidelink data, determine a first resource determination mode as the target resource determination mode, where the first resource determination mode involves determining the target sidelink resource from the preset resource pool.

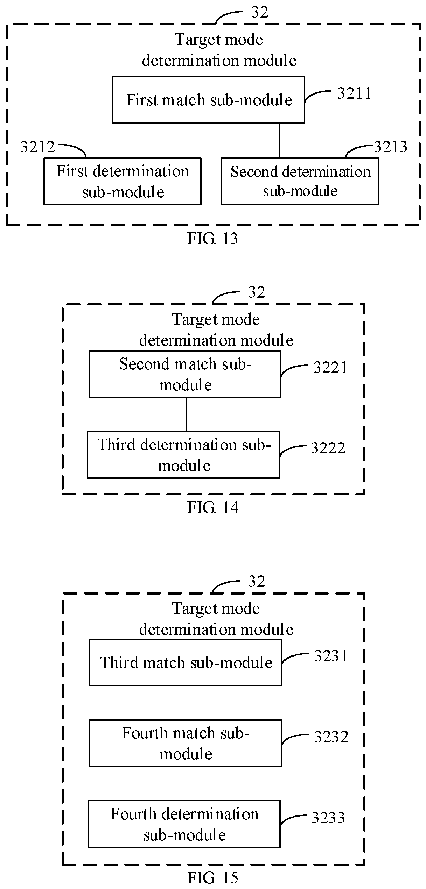

Referring to FIG. 13 showing a block diagram illustrating another apparatus for determining sidelink resource according to an example of the present disclosure, not being part of the invention, on the basis of the apparatus embodiment shown in FIG. 12, the target mode determination module 32 may further include:
a second determination sub-module 3213, configured to, in response to the first preset QoS information not including the QoS information of the to-be-transmitted sidelink data, determine a second resource determination mode as the target resource determination mode, where the second resource determination mode involves requesting a network to dynamically schedule sidelink resources.

In another apparatus embodiment of the present disclosure, the sidelink resource configuration information determined by the configuration information determination module 31 may further include: first preset indication information for informing the user equipment of acquiring the target sidelink resource in the second resource determination mode in response to the first preset QoS information not including the QoS information of the to-be-transmitted sidelink data.

Correspondingly, the second determination sub-module 3213 may be configured to determine the second resource determination mode as the target resource determination mode according to the first preset indication information.

In another apparatus embodiment of the present disclosure, not being part of the invention, the sidelink resource configuration information determined by the configuration information determination module 31 may include: a correspondence between second preset QoS information and a second resource determination mode, where the second resource determination mode involves requesting a network to dynamically schedule sidelink resources.

Correspondingly, referring to FIG. 14 showing a block diagram illustrating another apparatus for determining sidelink resource according to an example of the present disclosure, not being part of the invention, on the basis of the apparatus embodiment shown in FIG. 11, the target mode determination module 32 may include:
a second match sub-module 3221, configured to determine whether the second preset QoS information includes the QoS information of the to-be-transmitted sidelink data; and
a third determination sub-module 3222, configured to, in response to the second preset QoS information including the QoS information of the to-be-transmitted sidelink data, determine the second resource determination mode as the target resource determination mode.

In another apparatus embodiment of the present disclosure, not being part of the invention, the sidelink resource configuration information determined by the configuration information determination module 31 may include: a correspondence between third preset QoS information, and a second resource determination mode and a preset radio access type; the second resource determination mode involves requesting a network to dynamically schedule sidelink resources.

In an apparatus embodiment of the present disclosure, not being part of the invention, the preset radio access technology type may include at least one of: NR sidelink access technology or Long Term Evolution (LTE) sidelink access technology.

Correspondingly, referring to FIG. 15 showing a block diagram illustrating another apparatus for determining sidelink resource according to an example of the present disclosure, not being part of the invention, on the basis of the apparatus embodiment shown in FIG. 11, the target mode determination module 32 may include:
a third match sub-module 3231, configured to determine whether the third preset QoS information includes the QoS information of the to-be-transmitted sidelink data;
a fourth match sub-module 3232, configured to, in response to the third preset QoS information including the QoS information of the to-be-transmitted sidelink data, determine whether the user equipment supports a target radio access technology type corresponding to the QoS information of the to-be-transmitted sidelink data; and
a fourth determination sub-module 3233, configured to, in response to the user equipment supporting the target radio access technology type, determine the second resource determination mode as the target resource determination mode.

In an apparatus embodiment of the present disclosure, not being part of the invention, in response to the target resource determination mode determined by the target mode determination module 32 being the first resource determination mode,
the resource determination module 33 may be configured to: determine the target sidelink resource from a target preset resource pool corresponding to the QoS information of the to-be-transmitted sidelink data.

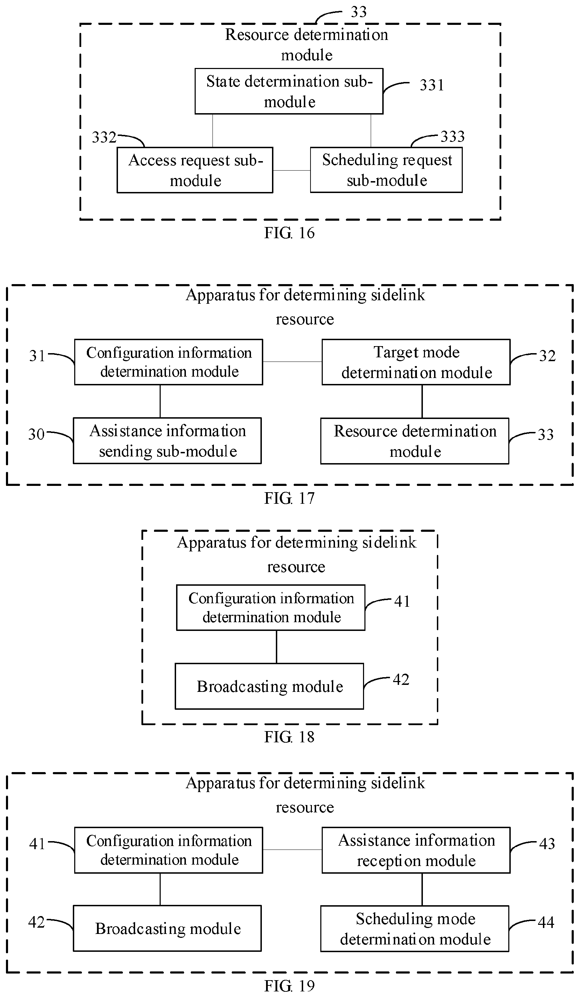

In another apparatus embodiment of the present disclosure, in response to the target resource determination mode determined by the target mode determination module 32 being configured to request a network to dynamically schedule sidelink resources;
referring to FIG. 16 showing a block diagram illustrating another apparatus for determining sidelink resource according to an example of the present disclosure, not being part of the invention, the resource determination module 33 may include:
a state determination sub-module 331, configured to determine a current connection state of the user equipment;
an access request sub-module 332, configured to, in response to the user equipment being currently in an idle state, request the base station to establish a network connection; and
a scheduling request sub-module 333, configured to, in response to the user equipment being currently in a connected state, send sidelink resource request information to the base station;
where the sidelink resource request information is used for requesting the base station to dynamically schedule slidelink resources for the user equipment.

Referring to FIG. 17 showing a block diagram illustrating another apparatus for determining sidelink resource according to an example of the present disclosure, not being part of the invention, on the basis of the apparatus embodiment shown in FIG. 11, the apparatus may further include:
an assistance information sending sub-module 30, configured to send sending sidelink assistance information to the base station, so that the base station schedules sidelink resources for the user equipment by referring to the sidelink assistance information.

Corresponding to the method embodiments for determining the sidelink resource executed by the base station, the present disclosure also provides an apparatus for determining sidelink resource, which may be provided in a base station.

Referring to FIG. 18 showing a block diagram illustrating an apparatus for determining sidelink resource according to an example of the present disclosure, not being part of the invention, the apparatus may include:
a configuration information determination module 41, configured to determine sidelink resource configuration information, where the sidelink resource configuration information is used to instruct user equipment to determine a target sidelink resource according to quality of service (QoS) information of to-be-transmitted sidelink data;
in the present disclosure, the sidelink resource configuration information may include at least one of:
   a correspondence between a preset resource pool and first preset QoS information;
   a correspondence between second preset QoS information and a second resource determination mode, where the second resource determination mode involves requesting a network to dynamically schedule sidelink resources; or
   a correspondence between third preset QoS information, and the second resource determination mode and a preset radio access type.
   a broadcasting module 42, configured to broadcast the sidelink resource configuration information to the user equipment in a serving cell, so that the user equipment determines a target sidelink resource for conveying the to-be-transmitted sidelink data according to QoS information of the to-be-transmitted sidelink data and the sidelink resource configuration information.

Referring to FIG. 19 showing a block diagram illustrating another apparatus for determining sidelink resource according to an example of the present disclosure, on the basis of the apparatus embodiment shown in FIG. 18, not being part of the invention, the apparatus may further include:
an assistance information reception module 43, configured to receive sidelink assistance information sent by the user equipment; and
a scheduling mode determination module 44, configured to determine a resource scheduling mode for the user equipment with reference to the sidelink assistance information.

For the apparatus embodiment, not being part of the invention, since the apparatus substantially corresponds to the method embodiment, reference may be made to some description of the method embodiment. The apparatus embodiments described above are merely schematic, in which the units described as separate components may or may not be physically separated, and the components displayed as units may or may not be physical units, may be located in one place, or may be distributed to a plurality of network units. Some or all of the modules may be selected according to actual needs to achieve the solution of the present disclosure, which a person of ordinary skill in the art would understand and implement without creative efforts.

Correspondingly, in an aspect, there is provided user equipment, including:
a processor; and
a memory storing instructions executable by the processor,
where the processor is configured to:
   determine sidelink resource configuration information, where the sidelink resource configuration information is used to instruct the user equipment to determine a target sidelink resource according to quality of service (QoS) information of to-be-transmitted sidelink data;
   determine a target resource determination mode according to the QoS information of the to-be-transmitted sidelink data and the sidelink resource configuration information; and
   determine the target sidelink resource for conveying the to-be-transmitted sidelink data in the target resource determination mode.

In another aspect, there is provided a base station, including:
a processor; and
a memory storing instructions executable by the processor,
where the processor is configured to:
   determine sidelink resource configuration information, where the sidelink resource configuration information is used to instruct user equipment to determine a target sidelink resource according to quality of service (QoS) information of to-be-transmitted sidelink data; and
   broadcast the sidelink resource configuration information to the user equipment in a serving cell, so that the user equipment determines a target sidelink resource for conveying the to-be-transmitted sidelink data according to QoS information of the to-be-transmitted sidelink data and the sidelink resource configuration information.

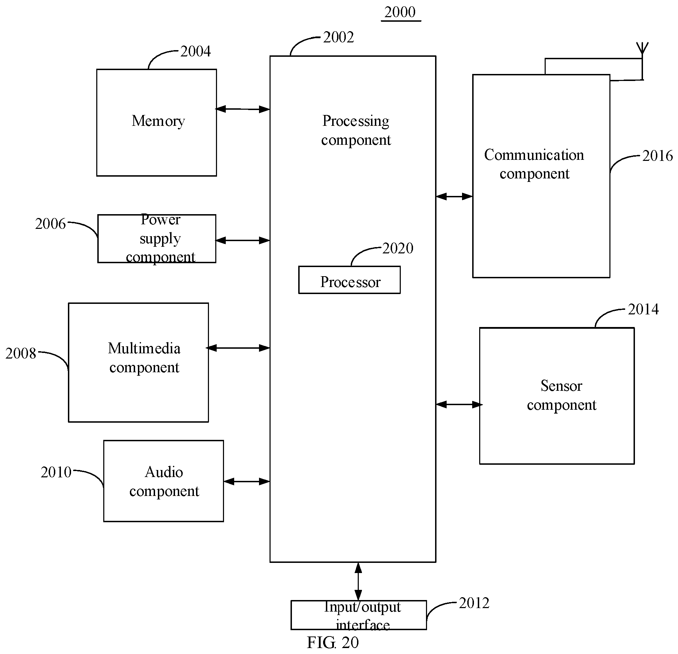

FIG. 20 is a schematic structural diagram illustrating user equipment 2000 according to an example of the present disclosure. The user equipment 2000 may be a terminal, including a mobile phone, a computer, a digital broadcast terminal, a message transceiving device, a game console, a tablet device, medical equipment, fitness equipment, a personal digital assistant and a wearable device such as a smart watch, smart glasses, a smart bracelet, smart running shoes, on-board equipment, etc.

As shown in FIG. 20, the user equipment 2000 may include one or more of the following components: a processing component 2002, a memory 2004, a power supply component 2006, a multimedia component 2008, an audio component 2010, an input/output (I/O) interface 2012, a sensor component 2014 and a communication component 2016.

The processing component 2002 generally controls overall operations of the user equipment 2000, such as operations associated with display, phone calls, data communications, camera operations, and recording operations. The processing component 2002 may include one or more processors 2020 to execute instructions so as to complete all or part of the steps of the above methods. In addition, the processing component 2002 may include one or more modules to facilitate the interaction between the processing component 2002 and other components. For example, the processing component 2002 may include a multimedia module to facilitate the interaction between the multimedia component 2008 and the processing component 2002.

The memory 2004 is configured to store various types of data to support the operation of the user equipment 2000. Examples of such data include instructions for any application or method operated on the user equipment 2000, contact data, phonebook data, messages, pictures, videos, and so on. The memory 2004 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or compact disk.

The power supply component 2006 supplies power for different components of the user equipment 2000. The power supply component 2006 may include a power supply management system, one or more power supplies, and other components associated with generating, managing and distributing power for the user equipment 2000.

The multimedia component 2008 includes a screen providing an output interface between the user equipment 2000 and a user. In some examples, the screen may include a Liquid Crystal Display (LCD) and a Touch Panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a duration and a pressure associated with the touch or swipe. In some examples, the multimedia component 2008 may include a front camera and/or a rear camera. The front camera and/or rear camera may receive external multimedia data when the user equipment 2000 is in an operating mode, such as a photographing mode or a video mode. Each of the front camera and the rear camera may be a fixed optical lens system or have focal length and optical zooming capability.

The audio component 2010 is to output and/or input an audio signal. For example, the audio component 2010 includes a microphone (MIC). When the user equipment 2000 is in an operating mode, such as a call mode, a record mode and a voice recognition mode, the microphone is to receive an external audio signal. The received audio signal may be further stored in the memory 2004 or sent via the communication component 2016. In some examples, the audio component 2010 further includes a speaker for outputting an audio signal.

The I/O interface 2012 provides an interface between the processing component 2002 and a peripheral interface module. The peripheral interface module may be a keyboard, a click wheel, buttons, or the like. These buttons may include but not limited to, a home button, a volume button, a start button and a lock button.

The sensor component 2014 includes one or more sensors to provide status assessments of various aspects for the user equipment 2000. For example, the sensor component 2014 may detect the on/off status of the user equipment 2000, and relative positioning of the component, for example, the component is a display and a keypad of the user equipment 2000. The sensor component 2014 may also detect a change in position of the user equipment 2000 or a component of the user equipment 2000, a presence or absence of the contact between a user and the user equipment 2000, an orientation or an acceleration/deceleration of the user equipment 2000, and a change in temperature of the user equipment 2000. The sensor component 2014 may include a proximity sensor to detect the presence of a nearby object without any physical contact. The sensor component 2014 may further include an optical sensor, such as a Complementary Metal-Oxide-Semiconductor (CMOS) or Charged Coupled Device (CCD) image sensor which is used in imaging applications. In some examples, the sensor component 2014 may further include an acceleration sensor, a gyroscope sensor, a magnetic sensor, a pressure sensor, or a temperature sensor.

The communication component 2016 is to facilitate wired or wireless communication between the user equipment 2000 and other devices. The user equipment 2000 may access a wireless network based on a communication standard, such as Wi-Fi, 2G, 3G, 4G LTE or 5G NR systems, or a combination thereof. In an example, the communication component 2016 receives a broadcast signal or broadcast related information from an external broadcast management system via a broadcast channel. In an example, the communication component 2016 may further include a Near Field Communication (NFC) module for promoting short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an example, the user equipment 2000 may be implemented by one or more Application Specific Integrated Circuits (ASICs), Digital Signal Processors (DSPs), Digital Signal Processing Devices (DSPDs), programmable Logic Devices (PLDs), Field Programmable Gate Arrays (FPGAs), controllers, microcontrollers, microprocessors, or other electronic components for performing the above method.

In an example, there is further provided a non-transitory computer readable storage medium including instructions, such as the memory 2004 including instructions, not being part of the invention. The above instructions may be executed by the processor 2020 of the user equipment 2000 to complete the above method of determining sidelink resource according to any of FIG. 2 to FIG. 8. For example, the non-transitory computer readable storage medium may be a Read-Only Memory (ROM), a Random Access Memory (RAM), a CD-ROM, a magnetic tape, a floppy disk, an optical data storage device, and the like.

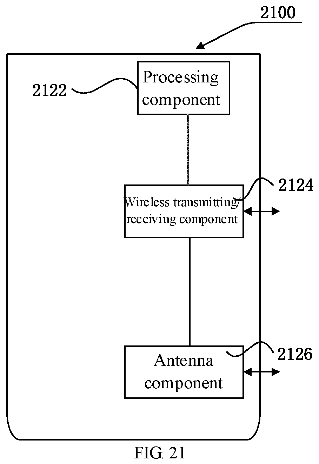

As shown in FIG. 21, FIG. 21 is a schematic structural diagram illustrating a base station 2100 according to an example of the present disclosure. The base station may be applied to a 5G NR network. Referring to FIG. 21, the base station 2100 includes a processing component 2122, a wireless transmitting/receiving component 2124, an antenna component 2126 and a signal processing portion specific to a wireless interface. The processing component 2122 may further include one or more processors.

One of the processors in the processing component 2122 may be configured to:
determine sidelink resource configuration information, where the sidelink resource configuration information is used to instruct user equipment to determine a target sidelink resource according to quality of service (QoS) information of to-be-transmitted sidelink data; and
broadcast the sidelink resource configuration information to the user equipment in a serving cell, so that the user equipment determines a target sidelink resource for conveying the to-be-transmitted sidelink data according to QoS information of the to-be-transmitted sidelink data and the sidelink resource configuration information. In the examples, there is further provided a non-transitory computer readable storage medium with computer instructions stored thereon, the computer instructions may be executable by the processing component 2122 in the base station 2100 to implement the method for determining sidelink resource according to FIG 9 or FIG 10. For example, the non-transitory computer-readable storage medium may be ROM, random access memory (RAM), CD-ROM, magnetic tape, floppy disk, optical data storage device, etc.

The scope of the invention is only limited by the appended claims.

## Claims

1. A method of determining sidelink resource, comprising:
acquiring, by user equipment (2000), sidelink resource configuration information broadcast by a base station, wherein the sidelink resource configuration information instructs the user equipment to determine a target sidelink resource according to quality of service, QoS, information of to-be-transmitted sidelink data, the sidelink resource configuration information comprises: a correspondence between a preset resource pool and first preset QoS information, and a correspondence between third preset QoS information, and a second resource determination mode and a preset radio access type;
determining (12), by the user equipment (2000), a target resource determination mode according to the QoS information of the to-be-transmitted sidelink data and the sidelink resource configuration information, wherein the target resource determination mode is a first resource determination mode or the second resource determination mode, the first resource determination mode involves determining, by the user equipment, the target sidelink resource from the preset resource pool, and the second resource determination mode involves requesting, by the user equipment, a network to dynamically schedule sidelink resources; and
determining (13), by the user equipment (2000), the target sidelink resource for conveying the to-be-transmitted sidelink data in the target resource determination mode;
wherein determining the target resource determination mode according to the QoS information of the to-be-transmitted sidelink data and the sidelink resource configuration information, comprises:
determining whether the first preset QoS information comprises the QoS information of the to-be-transmitted sidelink data;
in response to the first preset QoS information comprising the QoS information of the to-be-transmitted sidelink data, determining the first resource determination mode as the target resource determination mode;
in response to the first preset QoS information not comprising the QoS information of the to-be-transmitted sidelink data,
determining whether the third preset QoS information comprises the QoS information of the to-be-transmitted sidelink data,
in response to the third preset QoS information comprising the QoS information of the to-be-transmitted sidelink data, determining whether the user equipment supports a target radio access technology type corresponding to the QoS information of the to-be-transmitted sidelink data, and
in response to the user equipment supporting the target radio access technology type, determining the second resource determination mode as the target resource determination mode.

2. The method according to claim 1, wherein
the preset radio access technology type comprises at least one of: NR sidelink access technology or Long Term Evolution, LTE, sidelink access technology, and
the QoS information comprises: sidelink data package priority indication information, or channel quality indication information.

3. The method according to claims 1 or 2, wherein
in response to the target resource determination mode being the first resource determination mode, determining the target sidelink resource for conveying the to-be-transmitted sidelink data in the target resource determination mode, comprises:
determining the target sidelink resource from a target preset resource pool corresponding to the QoS information of the to-be-transmitted sidelink data.

4. The method according to any one of the preceding claims, wherein
in response to the target resource determination mode being configured to request the network to dynamically schedule sidelink resources, determining the target sidelink resource for conveying the to-be-transmitted sidelink data in the target resource determination mode, comprises:
determining a current connection state of the user equipment;
in response to the user equipment being currently in an idle state, requesting the base station to establish a network connection; and
in response to the user equipment being currently in a connected state, sending sidelink resource request information to the base station;
wherein the sidelink resource request information is used for requesting the base station to dynamically schedule slidelink resources for the user equipment.

5. The method according to any one of the preceding claims, wherein before determining the target resource determination mode according to the QoS information of the to-be-transmitted sidelink data and the sidelink resource configuration information, the method further comprises:
sending sidelink assistance information to the base station, so that the base station schedules sidelink resources for the user equipment by referring to the sidelink assistance information, wherein the sidelink assistance information informs the base station of information of the user equipment using sidelink technology.

6. A method of determining sidelink resource, comprising
determining (21), by a base station (2100), sidelink resource configuration information, wherein the sidelink resource configuration information instructs user equipment to determine a target sidelink resource in a target resource determination mode according to quality of service, QoS, information of to-be-transmitted sidelink data, the sidelink resource configuration information comprises: a correspondence between a preset resource pool and first preset QoS information, and a correspondence between third preset QoS information, and a second resource determination mode and a preset radio access type; wherein the target resource determination mode is a first resource determination mode or the second resource determination mode, the first resource determination mode involves determining, by the user equipment, the target sidelink resource from the preset resource pool, and the second resource determination mode involves requesting, by the user equipment, a network to dynamically schedule sidelink resources; and
broadcasting (22), by the base station (2100), the sidelink resource configuration information to the user equipment in a serving cell;
the sidelink resource configuration information is used to indicate the user equipment to:
determine the target resource determination mode as the first resource determination mode in response to satisfying conditions: the first preset QoS information comprises the QoS information of the to-be-transmitted sidelink data, and
determine the target resource determination mode as the second resource determination mode in response to satisfying conditions: the first preset QoS information does not comprise the QoS information of the to-be-transmitted sidelink data, the third preset QoS information comprises the QoS information of the to-be-transmitted sidelink data; and the user equipment supports a target radio access technology type corresponding to the QoS information of the to-be-transmitted sidelink data.

7. The method according to claim 6, further comprising:
receiving sidelink assistance information sent by the user equipment, wherein the sidelink assistance information informs the base station of information of the user equipment using sidelink technology; and
determining a resource scheduling mode for the user equipment with reference to the sidelink assistance information.

8. User equipment (2000), comprising:
a processor (2002); and
a memory (2004) storing instructions executable by the processor (2002),
wherein the processor (2002) is configured to perform the method of determining sidelink resource according to any one of claims 1-5.

9. A base station (2100), comprising
a processor (2122); and
a memory storing instructions executable by the processor (2122),
wherein the processor (2122) is configured to perform the method of determining sidelink resource according to any one of claims 6 and 7.

## Patentansprüche

1. Verfahren zur Bestimmung von Sidelink-Ressourcen, umfassend:
Erhalten, durch eine Benutzervorrichtung (2000), von Sidelink-Ressourcenkonfigurationsinformationen, die von einer Basisstation gesendet werden, wobei die Sidelink-Ressourcenkonfigurationsinformationen die Benutzervorrichtung anweisen, eine Ziel-Sidelink-Ressource gemäß Quality-of-Service-, QoS-, Informationen der zu übertragenden Sidelink-Daten zu bestimmen, wobei die Sidelink-Ressourcenkonfigurationsinformationen umfassen: eine Entsprechung zwischen einem vorgegebenen Ressourcenpool und ersten vorgegebenen QoS-Informationen sowie eine Entsprechung zwischen dritten vorgegebenen QoS-Informationen, und einem zweiten Ressourcenbestimmungsmodus und einem vorgegebenen Funkzugriffstyp;
Bestimmen (12), durch die Benutzervorrichtung (2000), eines Ziel-Ressourcenbestimmungsmodus gemäß den QoS-Informationen der zu übertragenden Sidelink-Daten und den Sidelink-Ressourcenkonfigurationsinformationen, wobei der Ziel-Ressourcenbestimmungsmodus ein erster Ressourcenbestimmungsmodus oder der zweite Ressourcenbestimmungsmodus ist, wobei der erste Ressourcenbestimmungsmodus das Bestimmen, durch die Benutzervorrichtung, der Ziel-Sidelink-Ressource aus dem vorgegebenen Ressourcenpool umfasst und der zweite Ressourcenbestimmungsmodus das Anfordern, durch die Benutzervorrichtung, eines Netzwerks zur dynamischen Planung von Sidelink-Ressourcen umfasst; und
Bestimmen (13), durch die Benutzervorrichtung (2000), der Ziel-Sidelink-Ressource zum Übermitteln der zu übertragenden Sidelink-Daten im Ziel-Ressourcenbestimmungsmodus;
wobei das Bestimmen des Ziel-Ressourcenbestimmungsmodus gemäß den QoS-Informationen der zu übertragenden Sidelink-Daten und den Sidelink-Ressourcenkonfigurationsinformationen umfasst:
Bestimmen, ob die ersten vorgegebenen QoS-Informationen die QoS-Informationen der zu übertragenden Sidelink-Daten umfassen;
als Reaktion darauf, dass die ersten vorgegebenen QoS-Informationen die QoS-Informationen der zu übertragenden Sidelink-Daten umfassen, Bestimmen des ersten Ressourcenbestimmungsmodus als den Ziel-Ressourcenbestimmungsmodus;
als Reaktion darauf, dass die ersten vorgegebenen QoS-Informationen die QoS-Informationen der zu übertragenden Sidelink-Daten nicht umfassen,
Bestimmen, ob die dritten vorgegebenen QoS-Informationen die QoS-Informationen der zu übertragenden Sidelink-Daten umfassen,
als Reaktion darauf, dass die dritten vorgegebenen QoS-Informationen die QoS-Informationen der zu übertragenden Sidelink-Daten umfassen, Bestimmen, ob die Benutzervorrichtung einen Ziel-Funkzugriffstechnologietyp unterstützt, der den QoS-Informationen der zu übertragenden Sidelink-Daten entspricht, und
als Reaktion darauf, dass die Benutzervorrichtung den Ziel-Funkzugriffstechnologietyp unterstützt, Bestimmen des zweiten Ressourcenbestimmungsmodus als den Ziel-Ressourcenbestimmungsmodus.

2. Verfahren nach Anspruch 1, wobei
der vorgegebene Funkzugriffstechnologietyp mindestens eines der folgenden umfasst: NR-Sidelink-Zugriffstechnologie oder LTE-Sidelink-Zugriffstechnologie (Long Term Evolution), und
die QoS-Informationen umfassen: Sidelink-Datenpaket-Prioritätsindikationsinformationen oder Kanalqualitätsindikationsinformationen.

3. Verfahren nach Anspruch 1 oder 2, wobei
als Reaktion darauf, dass der Ziel-Ressourcenbestimmungsmodus der erste Ressourcenbestimmungsmodus ist, das Bestimmen der Ziel-Sidelink-Ressource zum Übermitteln der zu übertragenden Sidelink-Daten im Ziel-Ressourcenbestimmungsmodus umfasst:
Bestimmen der Ziel-Sidelink-Ressource aus einem Ziel-vorgegebenen Ressourcenpool, der den QoS-Informationen der zu übertragenden Sidelink-Daten entspricht.

4. Verfahren nach einem der vorherigen Ansprüche, wobei
als Reaktion darauf, dass der Ziel-Ressourcenbestimmungsmodus so konfiguriert ist, dass das Netzwerk aufgefordert wird, Sidelink-Ressourcen dynamisch zu planen, das Bestimmen der Ziel-Sidelink-Ressource zum Übermitteln der zu übertragenden Sidelink-Daten im Ziel-Ressourcenbestimmungsmodus umfasst:
Bestimmen eines aktuellen Verbindungszustands der Benutzervorrichtung;
als Reaktion darauf, dass sich die Benutzervorrichtung derzeit in einem Leerlaufzustand befindet, Auffordern der Basisstation, eine Netzwerkverbindung herzustellen; und
als Reaktion darauf, dass sich die Benutzervorrichtung derzeit in einem verbundenen Zustand befindet, Senden von Sidelink-Ressourcenanforderungsinformationen an die Basisstation;
wobei die Sidelink-Ressourcenanforderungsinformationen verwendet werden, um die Basisstation aufzufordern, Sidelink-Ressourcen für die Benutzervorrichtung dynamisch zu planen.

5. Verfahren nach einem der vorherigen Ansprüche, wobei vor dem Bestimmen des Ziel-Ressourcenbestimmungsmodus gemäß den QoS-Informationen der zu übertragenden Sidelink-Daten und den Sidelink-Ressourcenkonfigurationsinformationen das Verfahren weiterhin umfasst:
Senden von Sidelink-Unterstützungsinformationen an die Basisstation, damit die Basisstation Sidelink-Ressourcen für die Benutzervorrichtung unter Bezugnahme auf die Sidelink-Unterstützungsinformationen plant, wobei die Sidelink-Unterstützungsinformationen die Basisstation über Informationen der Benutzervorrichtung informieren, die Sidelink-Technologie verwendet.

6. Verfahren zur Bestimmung von Sidelink-Ressourcen, umfassend:
Bestimmen (21), durch eine Basisstation (2100), von Sidelink-Ressourcenkonfigurationsinformationen, wobei die Sidelink-Ressourcenkonfigurationsinformationen eine Benutzervorrichtung anweisen, eine Ziel-Sidelink-Ressource in einem Ziel-Ressourcenbestimmungsmodus gemäß Quality-of-Service-, QoS-, Informationen der zu übertragenden Sidelink-Daten zu bestimmen, wobei die Sidelink-Ressourcenkonfigurationsinformationen umfassen: eine Entsprechung zwischen einem vorgegebenen Ressourcenpool und ersten vorgegebenen QoS-Informationen sowie eine Entsprechung zwischen dritten vorgegebenen QoS-Informationen, und einem zweiten Ressourcenbestimmungsmodus und einem vorgegebenen Funkzugriffstyp; wobei der Ziel-Ressourcenbestimmungsmodus ein erster Ressourcenbestimmungsmodus oder der zweite Ressourcenbestimmungsmodus ist, wobei der erste Ressourcenbestimmungsmodus das Bestimmen, durch die Benutzervorrichtung, der Ziel-Sidelink-Ressource aus dem vorgegebenen Ressourcenpool umfasst und der zweite Ressourcenbestimmungsmodus das Anfordern, durch die Benutzervorrichtung, eines Netzwerks zur dynamischen Planung von Sidelink-Ressourcen umfasst; und
Senden (22), durch die Basisstation (2100), der Sidelink-Ressourcenkonfigurationsinformationen an die Benutzervorrichtung in einer bedienten Zelle;
wobei die Sidelink-Ressourcenkonfigurationsinformationen verwendet werden, um die Benutzervorrichtung anzuweisen:
den Ziel-Ressourcenbestimmungsmodus als den ersten Ressourcenbestimmungsmodus zu bestimmen, als Reaktion darauf, dass die folgenden Bedingungen erfüllt sind: die ersten vorgegebenen QoS-Informationen umfassen die QoS-Informationen der zu übertragenden Sidelink-Daten, und
den Ziel-Ressourcenbestimmungsmodus als den zweiten Ressourcenbestimmungsmodus zu bestimmen, als Reaktion darauf, dass die folgenden Bedingungen erfüllt sind: die ersten vorgegebenen QoS-Informationen umfassen die QoS-Informationen der zu übertragenden Sidelink-Daten nicht, die dritten vorgegebenen QoS-Informationen umfassen die QoS-Informationen der zu übertragenden Sidelink-Daten, und die Benutzervorrichtung unterstützt einen Ziel-Funkzugriffstechnologietyp, der den QoS-Informationen der zu übertragenden Sidelink-Daten entspricht.

7. Verfahren nach Anspruch 6, weiterhin umfassend:
Empfangen von Sidelink-Unterstützungsinformationen, die von der Benutzervorrichtung gesendet werden, wobei die Sidelink-Unterstützungsinformationen die Basisstation über Informationen der Benutzervorrichtung informieren, die Sidelink-Technologie verwendet; und
Bestimmen eines Ressourcenplanungsmodus für die Benutzervorrichtung unter Bezugnahme auf die Sidelink-Unterstützungsinformationen.

8. Benutzervorrichtung (2000), umfassend:
einen Prozessor (2002); und
einen Speicher (2004), der Anweisungen speichert, die durch den Prozessor (2002) ausführbar sind,
wobei der Prozessor (2002) konfiguriert ist, um das Verfahren zur Bestimmung von Sidelink-Ressourcen nach einem der Ansprüche 1-5 auszuführen.

9. Basisstation (2100), umfassend:
einen Prozessor (2122); und
einen Speicher, der Anweisungen speichert, die durch den Prozessor (2122) ausführbar sind,
wobei der Prozessor (2122) konfiguriert ist, um das Verfahren zur Bestimmung von Sidelink-Ressourcen nach einem der Ansprüche 6 und 7 auszuführen.

## Revendications

1. Procédé de détermination de ressource de liaison latérale, comprenant :
l'acquisition, par un équipement utilisateur (2000), d'informations de configuration de ressource de liaison latérale diffusées par une station de base, les informations de configuration de ressource de liaison latérale instruisant l'équipement utilisateur de déterminer une ressource de liaison latérale cible en fonction d'informations de qualité de service, QoS, de données de liaison latérale à transmettre, les informations de configuration de ressource de liaison latérale comprenant : une correspondance entre un pool de ressources prédéfinies et des premières informations QoS prédéfinies, et une correspondance entre des troisièmes informations QoS prédéfinies, un deuxième mode de détermination de ressource et un type d'accès radio prédéfini;
la détermination (12), par l'équipement utilisateur (2000), d'un mode de détermination de ressource cible en fonction des informations QoS des données de liaison latérale à transmettre et des informations de configuration de ressource de liaison latérale, le mode de détermination de ressource cible étant un premier mode de détermination de ressource ou le deuxième mode de détermination de ressource, le premier mode de détermination de ressource impliquant la détermination, par l'équipement utilisateur, de la ressource de liaison latérale cible à partir du pool de ressources prédéfini, et le deuxième mode de détermination de ressource impliquant la demande, par l'équipement utilisateur, à un réseau de planifier dynamiquement des ressources de liaison latérale ; et
la détermination (13), par l'équipement utilisateur (2000), de la ressource de liaison latérale cible pour transmettre les données de liaison latérale à transmettre dans le mode de détermination de ressource cible ;
la détermination du mode de détermination de ressource cible en fonction des informations QoS des données de liaison latérale à transmettre et des informations de configuration de ressource de liaison latérale comprenant :
la détermination si les premières informations QoS prédéfinies comprennent les informations QoS des données de liaison latérale à transmettre ;
en réponse aux premières informations QoS prédéfinies comprenant les informations QoS des données de liaison latérale à transmettre, la détermination du premier mode de détermination de ressource comme mode de détermination de ressource cible ;
en réponse aux premières informations QoS prédéfinies ne comprenant pas les informations QoS des données de liaison latérale à transmettre,
la détermination si les troisièmes informations QoS prédéfinies comprennent les informations QoS des données de liaison latérale à transmettre,
en réponse aux troisièmes informations QoS prédéfinies comprenant les informations QoS des données de liaison latérale à transmettre, la détermination si l'équipement utilisateur prend en charge un type de technologie d'accès radio cible correspondant aux informations QoS des données de liaison latérale à transmettre, et
en réponse à l'équipement utilisateur prenant en charge le type de technologie d'accès radio cible, la détermination du deuxième mode de détermination de ressource comme mode de détermination de ressource cible.

2. Procédé selon la revendication 1, dans lequel
le type de technologie d'accès radio prédéfini comprend au moins l'un des suivants : technologie d'accès de liaison latérale NR ou technologie d'accès de liaison latérale LTE (Long Term Evolution), et
les informations QoS comprennent : des informations d'indication de priorité de paquet de données de liaison latérale ou des informations d'indication de qualité de canal.

3. Procédé selon les revendications 1 ou 2, dans lequel
en réponse au mode de détermination de ressource cible étant le premier mode de détermination de ressource, la détermination de la ressource de liaison latérale cible pour transmettre les données de liaison latérale à transmettre dans le mode de détermination de ressource cible comprend :
la détermination de la ressource de liaison latérale cible à partir d'un pool de ressources prédéfini cible correspondant aux informations QoS des données de liaison latérale à transmettre.

4. Procédé selon l'une quelconque des revendications précédentes, dans lequel
en réponse au mode de détermination de ressource cible étant configuré pour demander au réseau de planifier dynamiquement des ressources de liaison latérale, la détermination de la ressource de liaison latérale cible pour transmettre les données de liaison latérale à transmettre dans le mode de détermination de ressource cible comprend :
la détermination d'un état de connexion actuel de l'équipement utilisateur ;
en réponse à l'équipement utilisateur étant actuellement dans un état inactif, la demande à la station de base d'établir une connexion réseau ; et
en réponse à l'équipement utilisateur étant actuellement dans un état connecté, l'envoi d'informations de demande de ressource de liaison latérale à la station de base ; les informations de demande de ressource de liaison latérale étant utilisées pour demander à la station de base de planifier dynamiquement des ressources de liaison latérale pour l'équipement utilisateur.

5. Procédé selon l'une quelconque des revendications précédentes, dans lequel avant de déterminer le mode de détermination de ressource cible en fonction des informations QoS des données de liaison latérale à transmettre et des informations de configuration de ressource de liaison latérale, le procédé comprend en outre :
l'envoi d'informations d'assistance de liaison latérale à la station de base, afin que la station de base planifie des ressources de liaison latérale pour l'équipement utilisateur en se référant aux informations d'assistance de liaison latérale, les informations d'assistance de liaison latérale informant la station de base des informations de l'équipement utilisateur utilisant la technologie de liaison latérale.

6. Procédé de détermination de ressource de liaison latérale, comprenant :
la détermination (21), par une station de base (2100), d'informations de configuration de ressource de liaison latérale, les informations de configuration de ressource de liaison latérale instruisant un équipement utilisateur de déterminer une ressource de liaison latérale cible dans un mode de détermination de ressource cible en fonction d'informations de qualité de service, QoS, de données de liaison latérale à transmettre, les informations de configuration de ressource de liaison latérale comprenant : une correspondance entre un pool de ressources prédéfinies et des premières informations QoS prédéfinies, et une correspondance entre des troisièmes informations QoS prédéfinies, un deuxième mode de détermination de ressource et un type d'accès radio prédéfini ; le mode de détermination de ressource cible étant un premier mode de détermination de ressource ou le deuxième mode de détermination de ressource, le premier mode de détermination de ressource impliquant la détermination, par l'équipement utilisateur, de la ressource de liaison latérale cible à partir du pool de ressources prédéfini, et le deuxième mode de détermination de ressource impliquant la demande, par l'équipement utilisateur, à un réseau de planifier dynamiquement des ressources de liaison latérale ; et
la diffusion (22), par la station de base (2100), des informations de configuration de ressource de liaison latérale à l'équipement utilisateur dans une cellule en service ;
les informations de configuration de ressource de liaison latérale étant utilisées pour indiquer à l'équipement utilisateur de :
déterminer le mode de détermination de ressource cible comme le premier mode de détermination de ressource en réponse à la satisfaction des conditions suivantes : les premières informations QoS prédéfinies comprennent les informations QoS des données de liaison latérale à transmettre, et
déterminer le mode de détermination de ressource cible comme le deuxième mode de détermination de ressource en réponse à la satisfaction des conditions suivantes : les premières informations QoS prédéfinies ne comprennent pas les informations QoS des données de liaison latérale à transmettre, les troisièmes informations QoS prédéfinies comprennent les informations QoS des données de liaison latérale à transmettre, et l'équipement utilisateur prend en charge un type de technologie d'accès radio cible correspondant aux informations QoS des données de liaison latérale à transmettre.

7. Procédé selon la revendication 6, comprenant en outre :
la réception d'informations d'assistance de liaison latérale envoyées par l'équipement utilisateur, les informations d'assistance de liaison latérale informant la station de base des informations de l'équipement utilisateur utilisant la technologie de liaison latérale ; et
la détermination d'un mode de planification de ressource pour l'équipement utilisateur en se référant aux informations d'assistance de liaison latérale.

8. Équipement utilisateur (2000), comprenant :
un processeur (2002) ; et
une mémoire (2004) stockant des instructions exécutables par le processeur (2002),
le processeur (2002) étant configuré pour exécuter le procédé de détermination de ressource de liaison latérale selon l'une quelconque des revendications 1 à 5.

9. Station de base (2100), comprenant :
un processeur (2122) ; et
une mémoire stockant des instructions exécutables par le processeur (2122),
le processeur (2122) étant configuré pour exécuter le procédé de détermination de ressource de liaison latérale selon l'une quelconque des revendications 6 et 7.
